(19) Europäisches Patentamt / European Patent Office / Office européen des brevets

(11) **EP 2 469 455 A1**

(12) **EUROPEAN PATENT APPLICATION**

(43) Date of publication:
**27.06.2012 Bulletin 2012/26**

(51) Int Cl.:
***G06Q 10/00*** (2012.01)

(21) Application number: **11163012.5**

(22) Date of filing: **19.04.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.12.2010 EP 10196461**

(71) Applicant: **Siemens Aktiengesellschaft
80333 Munich (DE)**

(72) Inventor: **Davidich, Maria
82061, Neuried (DE)**

(54) **Method and device for automatic calibration of simulation means based on human behaviour regarding obstacles**

(57) The method for automatic calibration of simulation means of individuals movement based on behaviour of moving individuals versus obstacles of the invention comprises collecting data regarding an area of interest where the individuals move and data regarding the moving individuals, analysing the collected data to obtain a source-target distribution for the moving individuals, the area of interest into primitive elements, constructing a target function for each primitive element, reconstructing the area of interest within a simulation means of individuals movement, obtaining the results of the simulation comparing the obtained simulated results with the collected data, and optimising the simulation means by calibrating the simulation means based on the collected data.

## Description

The present invention relates to a method and a device for automatically calibrating simulation means based on human behaviour around obstacles.

Technical Background

Pedestrian tracking is a viable tool for assessing and reconstructing information on pedestrian routes. In particular, information on from where to where pedestrians walk is necessary in a lot of applications. For example, the question of assignments to target or attraction points to which pedestrians walk and identification of sources where people start from is of vital importance for simulators of pedestrian streams. They model the behaviour of crowds in different infrastructures and places such as buildings, stadiums, train stations, airports and the like. The behaviour of crowds is interesting for statistical and economical purposes and above all for safety reasons. The goal is to gain better control over crowd behaviour, for example, by arranging pedestrian areas in a way that pedestrian streams are controllably and predictably steered. Simulations allow running through a number of scenarios in critical situations and finding adequate measures to avoid possible dangers, like choke points, high pedestrian densities and congestions.

The validity of the simulations may be improved by feeding the simulation means data reproducing actual and real situations. Simulations usually run in finite spaces, which in turn demands information about the sources and sinks of pedestrian streams.

Data regarding real situations can be obtained for example by video analysis tools that track pedestrian traces automatically. These tools save time and effort in that a multitude of pedestrians can be recognized automatically and assigned respective routes over the timeframe of the tracking, thereby quickly generating routing data of pedestrians in an observed area. Several problems that arise with the application of automated tracking include the inaccessibility of certain regions within a monitored area, the distance of regions to the tracking device which renders some pedestrians unrecognizable, the appearance of obstacles in the tracking path and similar adverse conditions.

One way to link pedestrian traces to sources and or sinks is to perform a manual assignment, in many cases based on the intuition and experience of the editor. For every pedestrian trace it has to be individually decided which source and/or sink may be assigned. Naturally, such an approach is rather ineffective for large amounts of data and pedestrian traces.

A further difficulty encountered while simulating the behaviour of pedestrians is that such simulation needs to be as close as possible to the reality of the pedestrian movement. With the knowledge currently available in the art, it is especially difficult to reconstruct the realistic behaviour of pedestrians towards obstacles in pedestrian stream simulations according to tracked pedestrian routes, and in particular the behaviour of pedestrians interacting with obstacles. Behaviour of pedestrians towards obstacles may be denoted by the distances which they hold while walking along walls and moving around obstacles that are situated on a route towards targets of their walk. The accurate reconstruction of such behaviour demands an accurate calibration of the simulation means against obstacles.

Summary of the invention

It is therefore an objective to the invention to provide a method and device for automatic calibration of simulation means based on the behaviour of pedestrians regarding obstacles. It is a further object of the invention, to provide an accurate method for automatic calibration of simulation means based on behaviour of pedestrians versus obstacles.

The afore mentioned problems are solved by a method for automatic calibration of simulation means of individuals movement based on behaviour of moving individuals versus obstacles, comprising: collecting data regarding an area of interest where the individuals move and data regarding the moving individuals, analysing the collected data to obtain a source-target distribution for the moving individuals, dividing the area of interest into primitive elements, constructing a target function for each primitive element, reconstructing the area of interest within a simulation means of individuals movement, obtaining the results of the simulation, comparing the obtained simulated results with the collected data, and optimising the simulation means by calibrating the simulation means based on the collected data.

The object of the present invention is also solved by a surveillance system, comprising a monitoring device configured to monitor a route of a moving individual on a compound and to generate routing data from the monitored route having initial location data and/or terminal location data, and a calculation device configured to collect data regarding an area of interest where the individuals move and data regarding the moving individuals, analyse said collected data to obtain a source-target distribution for the moving individuals, divide the area of interest into primitive elements, construct a target function for each primitive element, reconstruct the area of interest within a simulation means of individuals movement, obtain the results of the simulation, compare the obtained simulated results with the collected data, and optimise the simulation means by calibrating the simulation means based on the collected data.

Further modifications and variations are subject matter of the dependent claims.

In accordance with the method of the present invention the collected data comprises at least information regarding the topology of the area of interest, the position of all objects in the area, the sizes of the objects, the positions from where the moving individuals appear on an area of interest, the sources of the moving individuals, and the positions to where the moving individuals walk, the targets of the moving individuals, a frequency at which a moving individual appears from a certain source.

In accordance with the method of the present invention, the primitive elements are at least one of a corridor, a corner and combination between a corridor and a corner. Both the primitive element the corridor and the corner should are described via their respective target functions.

A target function for a corridor depends on a, that represents the average distance of a moving individual to a wall, a density of the moving individuals using the corridor, a velocity of the moving individuals, and a frequency, that referns to the moving individual trace frequency in a given corridor portion. The target function for a corner depends on distances d1 and d2 that are the distances of a moving individual to a corner before turning towards a corner and from a corner after turning, the velocity of the moving individual, the frequency of the moving individuals, and the moving individual trace frequency, and the density of the moving individuals.

In accordance with the method of the present invention reconstructing the area of interest within a simulation means of individuals' movement comprises reconstructing static elements of a scenario within a simulation means and dynamic elements of a scenario within a simulation means. The static elements of the scenario are at least one of the topology of the scenario and the elements of the scenario, the determined positions from where the moving individuals appear on the video, the sources of the moving individuals, and the targets of moving individuals. The dynamic elements of the scenario are at least one of a source frequency, how often a new moving individual appears on the video from a certain source, from where to where and how many moving individuals walk within the area of interest.

In accordance with the method of the preset invention comparing the obtained simulated results with the collected data comprises obtaining a fitness value of the simulation means, wherein the fitness value is a measure of the accuracy of a simulation means.

Further in accordance with the method of the preset invention the step of optimising the simulation means by calibrating the simulation means based on the collected data comprises using optimisation algorithm, wherein the optimisation algorithm is one of a genetic algorithm, and a threshold accepting algorithm.

Further yet in accordance with the method of the preset invention the step of optimising the simulation means by calibrating the simulation means based on the collected data further comprises increasing the fitness of the simulation means by performing a variation of the parameters of simulation.

Embodiments and modifications of the present invention will now be described with reference to the accompanying drawings, in which

Fig. 1 shows a cellular automaton for modelling pedestrian movements as being applied in an embodiment of the method according to an aspect of the present invention;

Fig. 2 illustrates an exemplary scenario topology, in accordance with the present invention;

Fug. 3 shows a graphical representation of a target function used for the calibration of pedestrian routes in accordance with the present invention;

Fig. 4 is an illustration of the trajectory that a pedestrian may follow around a corner;

Fig. 5 shows another graphical representation of a target function used for the calibration of pedestrian routes in accordance with the present invention

Fig. 6 shows a surveillance system according to one further embodiment of the present invention;

Fig. 7 shows a flow chart of a method according to one further embodiment, and

Fig. 8 represents an exemplary measured target function for an embodiment of the present invention.

The accompanying drawings are included to provide a further understanding of embodiments. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts. Features of the various exemplary embodiments described herein may be readily combined with each other, unless specifically noted otherwise.

Detailed description of embodiments

In this description, reference is made to "individuals", or "pedestrians". The terms of "individuals" or "pedestrians" are used interchangeably in this document. By individuals or pedestrians in terms of this description are understood traceable subjects who move in or across a compound or a scenario in a self-actuated and self-determined fashion. In a particular embodiment, individuals may be understood as pedestrians who move by foot. However, the concepts of the present invention may be readily adopted to other individuals like animals, vehicles, aircrafts, mobile robots or similar subjects.

In this description, reference is made to "compounds" or "scenarios". The terms of compounds or scenarios are used interchangeably in this description. Compounds in terms of this description are understood as two- or three-dimensional spaces across or in which individuals may move along traceable routes. In a particular embodiment, a compound may be an enclosed two-dimensional area in or across which pedestrians may move freely. Therefore, in this example the routing data comprises two-dimensional location data of, for example, lateral positions on the floor denoted by an x- and y-component. However, the concepts of the present invention may be readily adopted to other compounds like for example a monitored airspace, a monitored parking lot, an animal habitat, or other similar compounds. In particular, the routing data is not limited to two-dimensional location data, but may comprise three-dimensional location data as well.

Furthermore, it is made reference to "sources" and "sinks", which is to be understood as possible entrance or exit points for individuals entering or exiting the compound, i.e. predefined areas or points where a newly tracked individual in the compound may have come from or a no longer traceable individual may have went to. In a particular embodiment, sources and sinks may be entrance or exit points at the borders of a pedestrian area such as stairs, escalators, elevators, doors, hallways or similar. However, it is also possible for sources and sinks to be other compound specific entrance and exit points.

The term "monitoring a route" is used synonymous for any kind of tracking process in which individuals can be distinguished in a spatial as well as temporal fashion using sensor data gathered in a monitored compound. In a particular embodiment, a route of an individual can be monitored by detecting an individual on video data of a compound, for example taken with a stationary surveillance video camera. The individual can be tracked over time from the video data, thereby generating a trace correlating with the spatial extensions of the monitored compound. It is well knows to one skilled in the art how to correlate video data, for example taken in an angle relative to the floor of the compound, with the spatial dimensions of the compound in order to generate routing data of an individual matching with the space coordinates of the compound.

In other embodiments, other sensor data can be used as basils for generating route data as well, for example infrared camera data, radar data, ultrasonic wave reflexion data or similar. It is also possible for the individuals to assist generating the routing data automatically, for example when the individuals carry detectable beacons like RFID tags, active transponders, cell phones, detectable colour markers or similar, the movement of which can be detected by matching detection devices and translated into associated routing data.

The reconstruction of realistic behaviour towards and around obstacles and the automatic calibration of simulation tools for pedestrian movement based on data collected by video or sensors is necessary for the accurate simulation of pedestrian behaviour. As mentioned previously, the simulations of pedestrian behaviour are used for many applications. They imitate the behaviour of crowds within various environments and the generated data may be utilized for statistical, economical purposes and for the development of safety rules, with the overall goal of gaining a better control over crowd behaviour. Since the correct simulation of crowd behaviour does contribute to accurate off line planning, by using simulations as a planning tool, an operator may run a number of different scenarios regarding a critical situation and thus find the accurate measures to be taken to avoid dangers and improve security. Real time simulations use actual information and start with this information for prediction of situation evolution. The simulations need to accurately reproduce the evolution of a modelled situation. Therefore, the more accurate are the simulation tools, the more useful are they in the correct prediction of critical situations, and as such, the more useful as a planning tool.

Therefore the following description will provide insight, among others, into a method of automatic calibration of simulation means that takes into account the behaviour of pedestrian versus obstacles, behaviour that is observed based on data collected via sensors, such as video data, regarding tracked routes. The present invention does provide insight into the development of a criterion for comparison of video data with the results of a simulation and, based on said criteria, it will propose a method for automatic calibration of simulation means based on the interaction of pedestrian distances to obstacles, based for example on video data that collects tracked routes.

In accordance with the present invention is proposed a method for automatic calibration of simulation means based on the behaviour of moving individuals versus obstacles that comprises the steps of collecting data regarding an area of interest and regarding the pedestrians in the area and analyses the collected data to obtain a source-target distribution of the pedestrians.

As mentioned above, data is collected about the topology and the infrastructure of the observed area, such as regarding the different kinds of obstacles present in the area, and tracked traces of pedestrians within the examined area. For example, from a video source or from an alternative source of information, the following exemplary information may be extracted: information regarding the topology of the area of interest, encompassing information such as the position of all the objects, their sizes and other relevant details pertaining to the area of interest, the positions from where the pedestrians appear on an area of interest, the sources, and the positions to where pedestrians walk and their targets. Further, it is of interest to collect information regarding the middle frequency at which a pedestrian appears from a certain source. The source target distribution is analysed to obtain information regarding to where and how many pedestrians move.

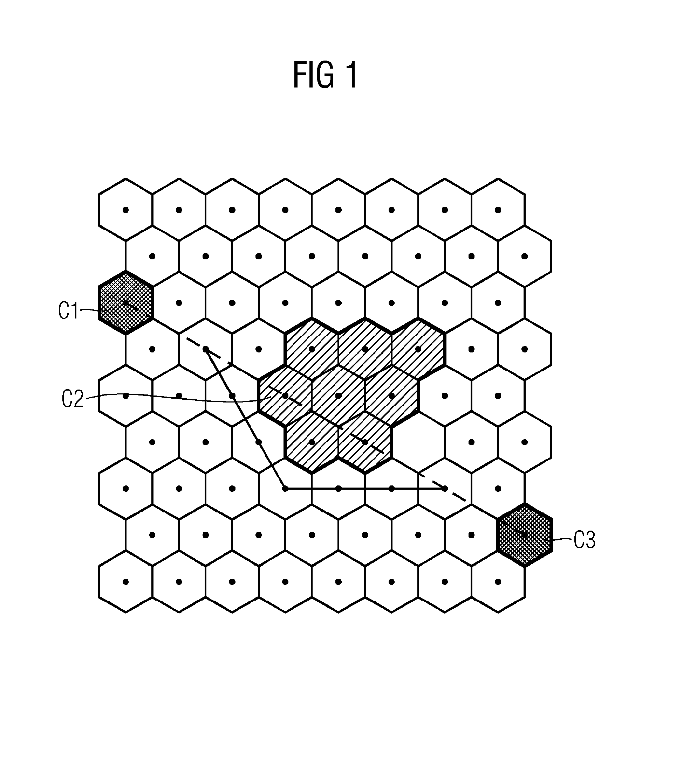

Figure 1 shows a cellular automaton based on a grid with hexagonal cells that is being used by the method according to an aspect of the present invention. According to an embodiment of the present invention pedestrian or entity motion can be simulated using a discretization of the simulation area by means of cells, which are hexagonal in the present embodiment. Said cells may in other embodiments be triangular or rectangular, among others. At every time step of the simulation procedure of an entity motion a cell has a state being defined by the number of pedestrians or entities being located on this cell. Pedestrians or entities move from one cell to another thus changing the state of each of the cells.

In the present embodiment an entity is located at cell C1 and desires to move forward to cell C3. The entity being located in cell C1 may proceed directly to cell C3, which is indicated in the present figure 1 by a dashed line. As the entity being located in C1 encounters an obstacle, for instance cell C2, it may not be possible to move directly from the location C1 to the cell C3. In this embodiment it may be required to move around the obstacle, for instance cell C2, which is indicated by a line in the present figure 1. The cell model as demonstrated in figure 1 may be a part of a motion simulation model. Different velocities of entities can be implemented by allowing the entity to proceed over several cells per simulation step. Hence, in the present embodiment velocity can also be referred to as cell speed indicated by the number of cells covered per simulation step.

In the present embodiment the entity moving from cell C1 to a cell C3 is a pedestrian. Cell C1 represents an elevator transporting pedestrians from a subway station to the surface. Cell C1 therefore acts as a source of pedestrians. Pedestrians may proceed across a public place by moving around a shop being represented by cell C2 and proceed to an exit, being represented by cell C3. Therefore, cell C3 acts as a pedestrian sink.

The basic cell model, as being introduced by the present figure 1, leaves degrees of freedom to be chosen, such as the individual speeds of pedestrians. Individuals may move at a specific velocity, which can be a sample of a Gaussian random distribution, parameterized by mean and standard deviation that depend on circumstances like gender, age, day time, place, among others. In crowds, pedestrians speed decreases because of obstructions imposed by other pedestrians. Deceleration of pedestrians may also depend on the density of pedestrians. This aspect can be modelled by deceleration classes and slow down factors for velocities depending on the occupancy of neighbouring cells by other pedestrians. It may therefore be the case, that in cell C1 several pedestrians are located. It may further be possible, to define a threshold of pedestrians per cell, which indicates, that the specific cell holds the state of being occupied and therefore representing an obstacle for further pedestrians.

The cell model as being described in the present figure 1 may be a part of the motion simulation model, while the modelling of pedestrian or entity motion behaviour is by no means restricted to the cell model. The person skilled in the art therefore appreciates further implementations of a motion simulation model, such as ontology, a set of rules, a formal model and/or a semi-formal model. The source-target distribution of from where to where and how many pedestrians move may be described via the above cell model.

The method for automatic calibration of pedestrian distances to obstacles proposed in accordance with the present invention further comprises the step of dividing a scenario into primitive elements.

The person skilled in the art will be aware that the primitive elements available to describe the scenario may be elected at the discretion and convenience of the person skilled in the art, and all said electable primitive elements are considered to be encompassed within the scope of the present invention. In order to simplify the following description two types of primitives are elected, the corridor and the corner.

By in the present invention is understood a space bordered by two walls, wherein pedestrians are moving freely and bidirectionally. By "corner" in the present invention is understood a space where a pedestrian or pedestrians is/are moving freely and with a trajectory following approximately 90 degrees.

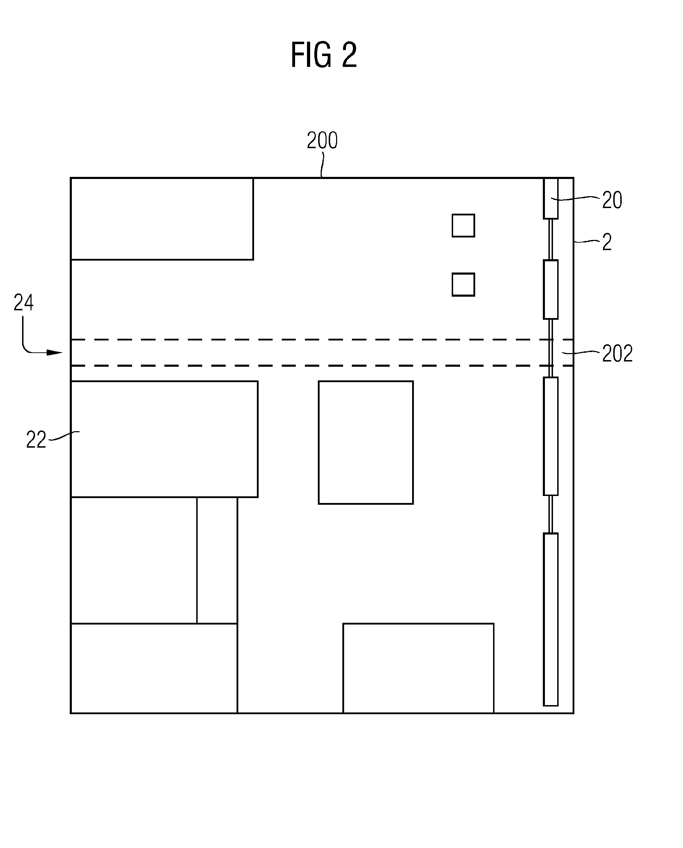

As illustrated in Fig. 2, that illustrates an exemplary scenario topology, scenario comprises a boundary 2 surrounding an area 200. The area 200 may be a pedestrian area and the boundary 2 may comprise obstacles 20 to pedestrian movement like walls, pillars, flower pots, fences or similar. The area 200 is not necessarily completely surrounded by hard boundaries (as illustrated), but instead the area 200 may be delimited by other criteria, such as the type of area, for example a monitored area relevant to security such as an event area or similar. The area 200 is an area which is monitored with a monitoring device such as a video camera in order to detect individuals in the area and to generating temporally resolved routing data of the individuals.

The area 200 may comprise obstacles within the area like the obstacle 22. Obstacle 22 may be, for example, the housing of an elevator or a breakthrough to other floors. Furthermore, area 200 may comprise an obstacle 20 such as a wall, a fence or a similar barrier.

Area 200 comprises possible sources and/or sinks for pedestrians, for example entrances or exits to the area 200. Exemplarily, possible sources and/or sinks 24 are shown. The possible sources and/or sinks have to be identified in a first step, for example based on video data of the area 200.

In the following reference is made to "sources", however, sources as used herein forth is equally used to mean sinks as well. A possible source 24 may be a broad region in the boundary 2, for example a hallway.

Other sources may be narrow enough to be determined by one source location point. The narrow sources may for example be escalators, elevators, doors or similar narrow entrance and/or exit points. Not all areas are clearly detectable by the monitoring device monitoring the area 200. Some areas may be very far away from a video camera, where pedestrians appear as too small to be tracked reliably. Other areas may not be clearly visible from the monitoring device, for example due to obstacles like treetops, canopies or the like.

The scenario 200 may comprise a plurality of corridors 202 and a plurality of corners 204. The topology illustrated in Fig. 2 is exemplary and the person skilled in the art will appreciate that its election is made here only for illustrative purposes. The scenario of Fig. 2 is illustrated as comprising a plurality of free spaces where the pedestrians may move, illustrated with shaded areas and a plurality of obstacles illustrated with the lighter areas. The geometry of the obstacles does not necessarily follows the geometry illustrated in Fig. 2 and they may have any other geometrical shapes envisioned by the person skilled in the art. Essentially, their shapes may be broken in the primitive shapes mentioned above, the corridor and the corner.

The scenario 200 may be provided with a plurality of sensors or any other sources of data such as video cameras, conveniently placed so as to maximize the amount of information collected regarding the space.

In order to obtain an accurate calibration of the simulation means, a target function for every primitive element should be obtained and taken into consideration by the simulation means. Therefore, in order to construct a target function for each primitive element, both the primitive element the corridor and the corner should be described via their respective target functions.

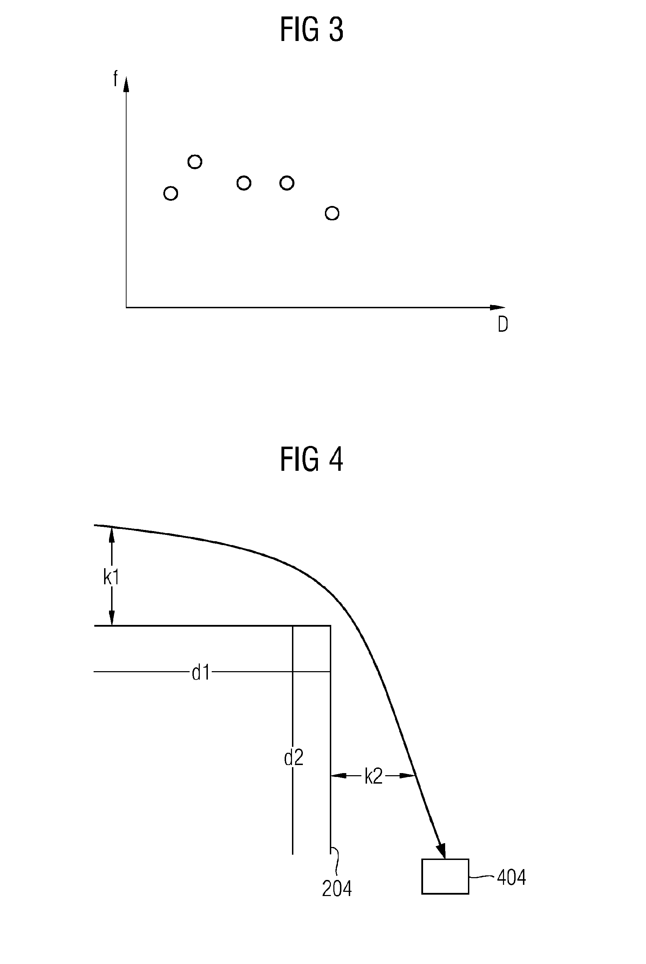

Assuming for example that the corridor that is the object of observation, the corridor is supervised via a video sensor. As soon as traces of pedestrian routes are available from the video sensor, information may be extracted from the available video data regarding the frequency of traces at different distances to a wall. The information may be graphically represented, as illustrated in Fig. 3, where along the horizontal axis (x) is represented the distance D to the wall, and on the vertical axis (y) is represented the frequency f of traces. The dots in figure 3 represent the frequency f of traces at a particular distance D to the wall. More precisely, the dots denote the frequency of pedestrian traces in a given perpendicular corridor slice at a particular distance to a wall. For the accurate extraction of information in a target function, in the representation of Fig. 3 only those pedestrians are selected who walk along the walls, pedestrians that are turning around an obstacles and may follow a trajectory of approximately 90 degrees around those obstacles are eliminated from consideration.

Since under consideration is the space denoted by a corridor, a behaviour is expected versus the walls forming the corridor. Although the walls may be actual walls or virtual walls that depend on how the definition of the corridor has been made, for simplicity it is considered only a distance to one wall of a corridor. Further, information regarding the pedestrians' interactions with wall is also extracted, therefore for accuracy the distance between the wall and the pedestrian should be as well considered. For reference, a range of distance of 2 m between the wall and the pedestrian will provide information regarding the interaction of the pedestrian with the wall.

The distribution of the dots in Fig. 3 may be approximated with an applicable polynomial function. It will be apparent for the person skilled in the art that for each dot distribution illustrated in a graph like figure 3 a different polynomial function will be applicable, polynomial function that will be recognized by a person killed in the art.

For the general case of a corridor, the target function is a polynomial function F that depends on a plurality of variables such as a, that represents the average distance of a pedestrian to a wall, the density, that represents the density of the pedestrians using the corridor, the velocity, that represents the velocity of pedestrians, and the frequency, that refers to the pedestrian trace frequency in a given corridor portion.

While considering the velocity of pedestrians, by velocity may as well be understood as the velocity of a cluster of pedestrians. Depending on the amount of available information from the video source, a general function or a reduced version of the function may be built. If video information is available regarding only a certain density of pedestrians and regarding a portion that is only within a certain distance to the wall, the target function may be build based on only the distance to a wall and the trace frequency f, as explained above in connection with Fig. 3.

Referring now to the illustration of Fig. 4, Fig. 4 is an illustration of the trajectory that a pedestrian may follow around a corner 204.

A pedestrian or a cluster of pedestrians is observed via the video camera as it follows a trajectory of movement 402 to advance from a corridor 202 towards a corner 204 and to move with the aim of reaching a target 404 situated in another corridor disposed perpendicularly per the direction of the corridor 202. For this purpose, the pedestrian needs to move in corridor 202 at a distance to the wall that is denoted with k1 in figure 4, advance in a semicircular trajectory relative to a corner 204 and continue its movement in corridor 204 at a distance to a perpendicular wall that is denoted with k2 in figure 4.

Assuming, for example, that the corner 204 and the perpendicular corridors that are the object of observation are supervised via a video sensor, as soon as traces of pedestrian routes are available from the video sensor, information may be extracted from the available video data regarding the frequency f of traces at different distances to a wall.

The pedestrians that are not moving along the corner 204 are filtered out. A target function F for a corner 204 takes into consideration as variables at least distances d1 and d2, that are the distances of a pedestrian to a corner before turning and from a corner after turning, the velocity of the pedestrian, the frequency of the pedestrians that represents the pedestrian trace frequency that is a given perpendicular corridor slice and the density of pedestrians.

Therefore, the target function F for the calibration of a corner can be generally expressed as:

F (d1, d2, velocity, frequency, density).

Depending on the accuracy that is desired and depending on the wealth of data extracted from the video source, a general target function F for a corner may be constructed or alternatively reduced forms of the function F for the corner may be constructed. For example, in case where information is available regarding a certain density of pedestrians and the average distance of to a corner is as well known, but not sufficient information is available regarding the frequency f of traces, the target function F may be constructed based on a reduced set of variables.

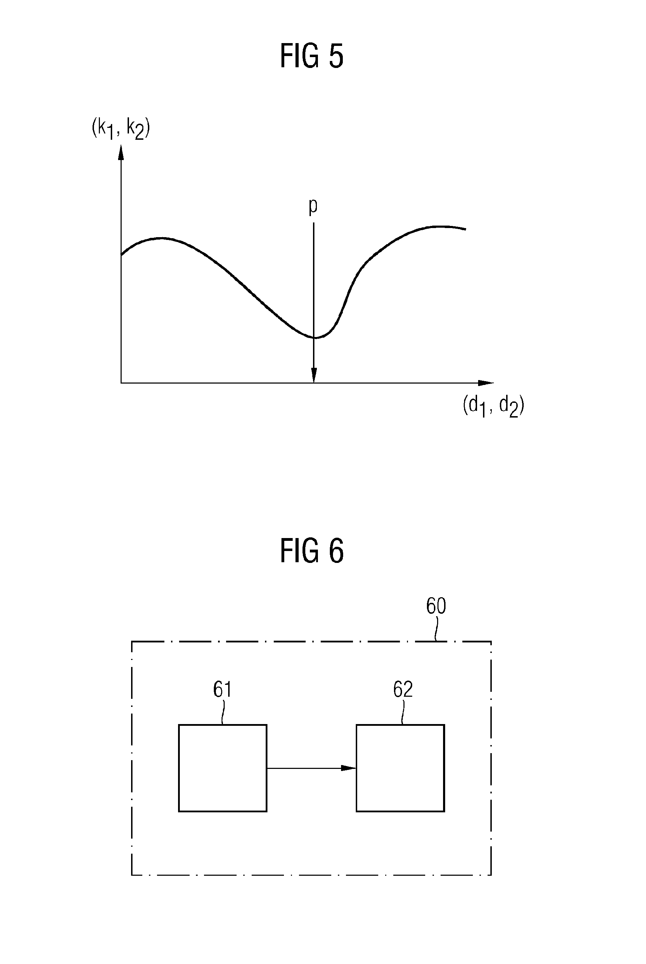

Figure 5 is a representation of a target function F used for the calibration of a pedestrian stream that is turning a corner. The target function F is an interpolation of dots that denote the frequency f of traces at a particular distance to a wall. On the horizontal axis (x) is represented the average distance to a corner, d1 and d2, and on the vertical axis (y) is represented the average distance to an obstacle k1, and k2. The position P of the corner is indicated as well on the horizontal axis.

Therefore, the method for automatic calibration simulation means based on pedestrian distances to obstacles of the present invention was discussed above as comprising at least the steps of collecting data regarding an area of interest 200 and regarding the pedestrians, analysing the collected data to obtain a source-target distribution of the pedestrians, dividing a scenario into primitive elements, and constructing a target function F for each primitive element. The method of the present invention further comprises a subsequent step or reconstructing the scenario within a simulation means or simulation software environment.

In order to calibrate the simulation environment versus the data collected exemplarily from a video source, both the static and the dynamic elements of the scenario need to be reconstructed in the simulation environment. As mentioned exemplarily above, by static elements of the scenario are understood the topology of the scenario and its elements and the determined positions from where the pedestrians appear on the video, their sources and the positions where the pedestrians are shown to leave the video, their targets.

By is to be understood possible entrance or exit points for individuals entering or exiting the compound, i.e. predefined areas or points where a newly tracked individual in the compound may have come from or a no longer traceable individual may have went to. In a particular embodiment, sources may be entrance or exit points at the borders of a pedestrian area such as stairs, escalators, elevators, doors, hallways or similar. However, it is also possible for sources to be other compound specific entrance and exit points.

By dynamical components are understood all the movement components of the pedestrians. Exemplarily they may be the source frequency, such as how often a new pedestrian appears on the video from a certain source. Further, from where to where and how many pedestrians walk within the area of interest. This type of information, along with information regarding the velocity distribution should also be included in the reconstructed scenario in simulation. For a more precise simulation, more aspects characteristic to the scenario should be included for simulation.

The method of the automatic calibration of pedestrian distances to obstacles of the present invention proceeds with obtaining comparable results from simulations. In order to be able to proceed with to obtain simulated results, the density distribution of the traces of pedestrians needs to be measured. The result of the simulation consists of simulated routes for pedestrians, which are subsequently compared with the pedestrian routes observed on the collected video.

Thus, as soon as all the parameters and the initial conditions are adjusted, the reconstructed scenario may be simulated via the available simulation tool and the results may be observed. In order to compare the behaviour of simulated pedestrians with the behaviour of pedestrians observed on the video, the results of the simulation are compared with the target functions previously determined. While taking into consideration the two basic primitive elements, the corridor and the corner, the results of the simulation are compared with the target function F of the corridor and the corner.

For example, a corridor can be observed via a video camera. In the simulation means information is provided about the pedestrians that walk along the walls and information is collected regarding their traces. Based in this information, a dependence of the frequency on the distance is obtained to a wall similar as it has been done for a target function F above. Also similarly this dependency may be approximated via a polynomial function. The steps are identically repeated for a corner that is simulated via the simulation means.

Subsequently the simulated results are compared with the data collected from the sensors, exemplarily the video source. For the comparison of the simulated results regarding the behaviour of the pedestrians with the behaviour of pedestrians observed on the video, the present invention proposes the following a criteria:

$$Fitness = 1/(F\ simulation - F\ target\ function).$$

By fitness in accordance with the present invention is understood a measure of the accuracy of a model. A larger value for the fitness is indicative of a more accurate simulated data. Various fitness values permit the comparison of various simulation valuers for accuracy.

The method of the present invention further comprises the step of optimisation of the simulation means based on the adaptation of the simulation generated data on video data.

In order to increase the accuracy of the simulation, the simulation means need to be adjusted. In order to adjust simulation in such a way that video data is accurately reproduced, different optimisation algorithms may be used, such as for example, genetic algorithms, threshold accepting algorithms, or any other algorithms that a person skilled in the art would be aware of. During the optimisation process, the fitness of the simulation means is attempted to be increased. The fitness may be increased by changing the parameters of simulation corresponding to the influence an obstacle has on pedestrian behaviour.

As soon as a desired accuracy is reached when compared with the data obtained from the video source, the optimisation process stops and the obtained parameters for simulation can be applied in future simulations.

The present invention proposes an approach that allows the automatic calibration of pedestrian stream simulation means, that move along obstacles, based on collected data regarding the pedestrian routes. As a result, increased accuracy of simulations may be obtained by the simulation means, and more realistic results may be obtained. The calibration of the simulation means based on the distance to obstacles is necessary for realistically simulating crowd behaviour, and to realistically simulate routes around obstacles.

The method of the present invention proposes structured, hard fact criteria for the optimisation of the simulation means, as opposed to the current attempts at calibrating the simulating means that are performed subjectively.

Further, once the mapping of source target is realized, the method enables to automatically process large amounts of data is real time, is traces can be provided in real time. Therefore, the present invention provides fast simulation of scenarios regarding the behaviour of the pedestrians.

The method of the present invention may be easily automated and enables the implementation of an improved autonomous system. Further, large amounts of data may be processed, since the manual intervention of the operator running the simulation means has been eliminated. The method of the present invention provides for accuracy of calibration of the simulation results, as opposed to the calibration methods known in the art that employ manual calibration.

As mentioned above, the prediction of crowd densities in critical regions is necessary to prevent disaster in critical situations and for life saving measures to become possible. Even for of-line simulations, the method of the present invention allows for a more accurate simulation of situations, thus for the more relevant and efficient usage of pedestrian stream simulations for planning or training situations.

Thus the method of the present invention allows for simple, fast, exact and automatic calibration of simulation means of pedestrian behaviour towards obstacles. The method is useful especially for simulations that require the use of large amount of data or for processing statistical data regarding pedestrian behaviour. It these cases the manual calibration methods known in the art prove ineffective, time consuming and tiring. Although through above description it was repeatedly mentioned that the real data regarding the pedestrian behaviour is provided by video means, the data for the purposes of the present invention may be provided by any other means.

The method of calibration of the simulation means of the present invention may be implemented in scenario surveillance systems.

Fig. 6 shows a surveillance system 60 according to an embodiment of the present invention. The surveillance system comprises a monitoring device 61 which is connected to a calculation device 62. The monitoring device 61 may be configured to monitor a route of a moving individual on a compound, or the movement of a group(s) of pedestrians. The monitoring device 61 may further be configured to generate routing data from the monitored route having initial location data and/or terminal location data. The routing data may in particular be similarly generated as explained in detail above. The compound surveillance system 60 may further include a calculation device 62 configured to, among others, perform the calibration method of the present invention. Specifically the calculation device 62 is configured to collect data regarding an area of interest where the individuals move and data regarding the moving individuals, analyse the collected data to obtain a source-target distribution for the moving individuals, divide the area of interest into primitive elements, construct a target function for each primitive element, reconstruct the area of interest within a simulation means of individuals movement, obtain the results of the simulation, compare the obtained simulated results with the collected data, and optimise the simulation means by calibrating the simulation means based on the collected data.

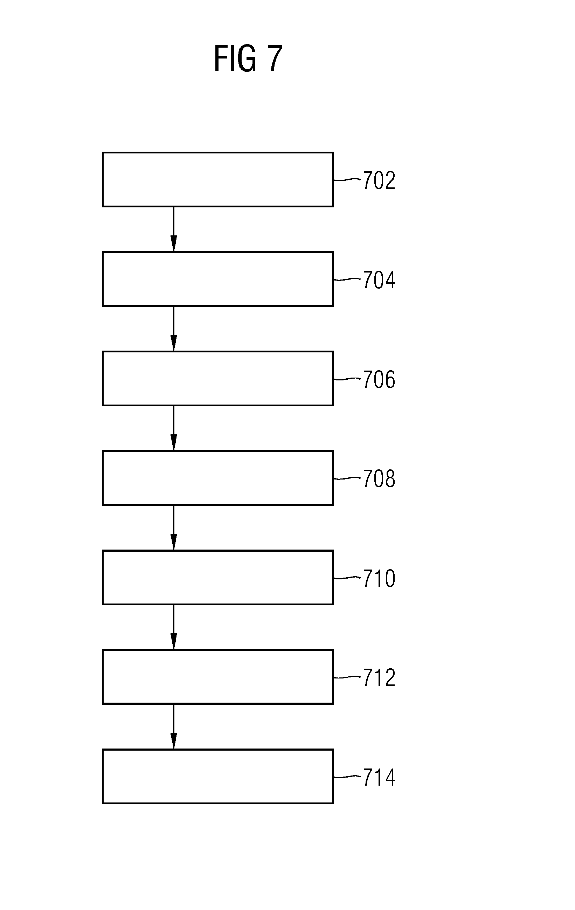

Fig. 7 shows a flow chart for a method for a method for automatic calibration of simulation means based on behaviour of pedestrian versus obstacles, comprising:

(a) in a step 702 data regarding an area of interest where the individuals move and data regarding the moving individuals is collected;
(b) in a step 704, the said collected data is analysed to obtain a source-target distribution for the moving individuals;
(c) in a step 706, the area of interest is divided into primitive elements;
(d) in a step 708, a target function for each primitive element is constructed;
(e) in a step 710 the area of interest is reconstructed within a simulation means of individuals movement;
(f) in a step 712 the results of the simulation are obtained;
(g) in a step 714 the obtained simulated results are compared with the collected data, and
(h) in a step 716 the simulation means are optimised by calibrating the simulation means based on the collected data.

The method of Fig. 7 may in particular be performed in accordance with the described processes in conjunction with Figs. 1 to 6.

The method of calibration of the present invention has been exemplarily applied for the particular case where the scenario is a railway station. Traces of pedestrians have been detected in a railway station where a camera was recording during 1,5 minutes during an afternoon. The traces were detected in a select area, well visible from the camera. Exemplarily, the examined portion of the railway station is shown in Fig. 2.

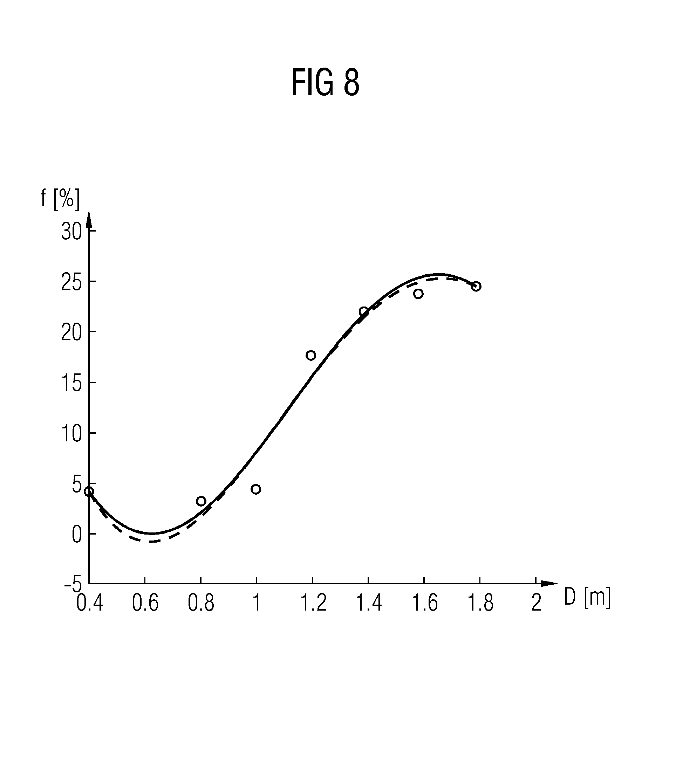

An exemplary corridor who's width is of 9,6 meters has been elected for observation. The analysis has been performed based on an the behaviour of 100 persons that were walking along the corridor without turning. The measured target function is represented in Fig. 8.

Fig. 8 represents the results of the video analysis, and the target function for the elected corridor is represented. The dots indicate the frequency f of pedestrian traces at a particular distance D to a wall. The various curves in figure 8 correspond to different polynomial functions which approximate this dependence. The number of persons has been merged within 20 centimetre intervals.

**Claims**

1.  A method for automatic calibration of simulation means of individuals movement based on behaviour of moving individuals versus obstacles, comprising:

    collecting (702) data regarding an area of interest (200) where the individuals move and data regarding the moving individuals;
    analysing (704) said collected data to obtain a source-target distribution for the moving individuals;
    dividing (706) the area of interest (200) into primitive elements;
    constructing (708) a target function for each primitive element;
    reconstructing (710) the area of interest (200) within a simulation means of individuals movement;
    obtaining (712) the results of the simulation;
    comparing (714) the obtained simulated results with the collected data, and
    optimising (716) the simulation means by calibrating the simulation means based on the collected data.

2.  The method of claims 1, wherein the collected data comprises at least information regarding the topology of the area of interest (200), the position of all objects in said area (200), the sizes of the objects, the positions from where the moving individuals appear on an area of interest, the sources of the moving individuals, and the positions to where the moving individuals walk, the targets of the moving individuals, a frequency at which a moving individual appears from a certain source.

3.  The method in accordance with one of the preceding claims, wherein said primitive elements are at least one of a corridor, a corner and combination between a corridor and a corner.

4.  The method in accordance with one of the preceding claims, wherein both the primitive element the corridor and the corner are described via their respective target functions.

5.  The method in accordance with one of the preceding claims, wherein a target function for a corridor depends on the average distance of a moving individual to a wall, a density of the moving individuals using the corridor, a velocity of the moving individuals, and a frequency, that refers to the moving individual trace frequency in a given corridor portion.

6. The method in accordance with one of the preceding claims, wherein a target function for a corner depends on distances d1 and d2, that are the distances of a moving individual to a corner before turning towards a corner and from a corner after turning, the velocity of the moving individual, the frequency of the moving individual, and the moving individual trace frequency, and the density of the moving individuals.

7. The method in accordance with one of the preceding claims, wherein reconstructing the area of interest within a simulation means of individuals movement comprises reconstructing static elements of a scenario within a simulation means and dynamic elements of a scenario within a simulation means.

8. The method in accordance with one of the preceding claims, wherein the static elements of the scenario are at least one of the topology of the scenario and the elements of the scenario, the determined positions from where the moving individuals appear on the video, the sources of the moving individuals , and the targets of moving individuals.

9. The method in accordance with one of the preceding claims, wherein the dynamic elements of the scenario are at least one of a source frequency, how often a new moving individual appears on the video from a certain source, from where to where and how many moving individuals walk within the area of interest (200).

10. The method in accordance with one of the preceding claims, wherein the comparing the obtained simulated results with the collected data comprises obtaining a fitness value of the simulation means, wherein the fitness value is a measure of the accuracy of a simulation means.

11. The method in accordance with one of the preceding claims, wherein the step of optimising the simulation means by calibrating the simulation means based on the collected data comprises using optimisation algorithm, wherein the optimisation algorithm is one of a genetic algorithm, and a threshold accepting algorithm.

12. The method in accordance with one of the preceding claims, wherein the step of optimising the simulation means by calibrating the simulation means based on the collected data further comprises increasing the fitness of the simulation means by performing a variation of the parameters of simulation.

13. A surveillance system (60), comprising:

a monitoring device (61) configured to monitor a route of at least one moving individual on a compound and to generate routing data from the monitored route having initial location data and/or terminal location data; and
a calculation device (62) configured to:

collect (702) data regarding an area of interest (200) where the individuals move and data regarding the moving individuals;
analyse (704) said collected data to obtain a source-target distribution for the moving individuals;
divide (706) the area of interest into primitive elements;
construct (708) a target function for each primitive element;
reconstruct (710) the area of interest within a simulation means of individuals movement;
obtain (712) the results of the simulation;
compare (714) the obtained simulated results with the collected data, and
optimise (716) the simulation means by calibrating the simulation means based on the collected data.

# FIG 1

# FIG 2

# FIG 3

# FIG 4

# FIG 5

$(k_1, k_2)$

p

$(d_1, d_2)$

# FIG 6

60

61

62

# FIG 7

702

704

706

708

710

712

714

# FIG 8

Europäisches Patentamt

European Patent Office

Office européen des brevets

**EUROPEAN SEARCH REPORT**

Application Number

EP 11 16 3012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | WOLFRAM KLEIN ET AL: "Towards the Calibration of Pedestrian Stream Models", 13 September 2009 (2009-09-13), PARALLEL PROCESSING AND APPLIED MATHEMATICS, SPRINGER BERLIN HEIDELBERG, BERLIN, HEIDELBERG, PAGE(S) 521 - 528, XP019147035, ISBN: 978-3-642-14402-8 | 1-13 | INV. G06Q10/00 |
| L | A. Johansson et al.: "Specification of a Microscopic Pedestrian Model by Evolutionary Adjustment to Video Tracking Data", , 25 October 2008 (2008-10-25), pages 1-19, XP002668142, Retrieved from the Internet: URL:http://arxiv.org/abs/0810.4587v1 [retrieved on 2012-01-25] * the whole document * | 1-13 | |
| L | TEKNOMO ET AL: "Application of microscopic pedestrian simulation model", TRANSPORTATION RESEARCH PART F: TRAFFIC PSYCHOLOGY AND BEHAVIOUR, PERGAMON, AMSTERDAM, NL, vol. 9, no. 1, 1 January 2006 (2006-01-01) , pages 15-27, XP025175518, ISSN: 1369-8478, DOI: 10.1016/J.TRF.2005.08.006 [retrieved on 2006-01-01] * the whole document * | 1-13 | TECHNICAL FIELDS SEARCHED (IPC)  G06Q |

-/--

The present search report has been drawn up for all claims

| Place of search | Date of completion of the search | Examiner |
|---|---|---|
| Munich | 27 January 2012 | Reino, Bernardo |

Europäisches
Patentamt

European
Patent Office

Office européen
des brevets

# EUROPEAN SEARCH REPORT

**Application Number**

EP 11 16 3012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | KARDI TEKNOMO ET AL: "SENSITIVITY ANALYSIS AND VALIDATION OF A MULTI-AGENTS PEDESTRIAN MODEL", JOURNAL OF THE EASTERN ASIA SOCIETY FOR TRANSPORTATION STUDIES, EASTERN ASIA SOCIETY FOR TRANSPORTATION STUDIES (EASTS), BANGKOK , vol. 6 1 January 2005 (2005-01-01), pages 198-213, XP002631030, ISSN: 1881-1124 Retrieved from the Internet: URL:http://www.easts.info/on-line/journal_06/198.pdf * the whole document * ----- | 1-13 | |
| A,P | EP 2 302 571 A1 (SIEMENS AG [DE]) 30 March 2011 (2011-03-30) * the whole document * ----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 27 January 2012 | Reino, Bernardo |

EPO FORM 1503 03.82 (P04C01)

## ANNEX TO THE EUROPEAN SEARCH REPORT
## ON EUROPEAN PATENT APPLICATION NO.

EP 11 16 3012

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2012

| Patent document cited in search report | | Publication date | Patent family member(s) | | Publication date |
|---|---|---|---|---|---|
| EP 2302571 | A1 | 30-03-2011 | EP<br>WO | 2302571 A1<br>2011032781 A1 | 30-03-2011<br>24-03-2011 |

EPO FORM P0459

For more details about this annex : see Official Journal of the European Patent Office, No. 12/82